**Europäisches Patentamt**

**European Patent Office**

**Office européen des brevets**

(19)

(11) Numéro de publication : **0 581 633 A1**

## (12) DEMANDE DE BREVET EUROPEEN

(21) Numéro de dépôt : **93401781.5**

(22) Date de dépôt : **08.07.93**

(51) Int. Cl.⁵ : **G01F 9/02,** G01F 9/00, G01F 25/00

(30) Priorité : **29.07.92 FR 9209374**

(43) Date de publication de la demande :
**02.02.94 Bulletin 94/05**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt (FR)**

(72) Inventeur : **Touzeau, Yves**
**6, rue Alfred de Musset**
**F-91790 Boissy sous Saint-Yon (FR)**
Inventeur : **Trubert, Philippe**
**4, rue R. Vaillant**
**F-91700 Sainte Genevieve des Bois (FR)**

(54) **Dispositif de mesure de la consommation de carburant des moteurs de véhicules automobiles.**

(57)   Dispositif de mesure de la consommation de carburant des moteurs des véhicules automobiles.

Ce dispositif interactif comporte un boîtier électronique (16) installé dans le compartiment-moteur et un micro-ordinateur de poche (54) amovible, installé dans l'habitacle. Le boîtier (16) reçoit les impulsions de consommation et de parcours produites par un calculateur d'injection (10) et un capteur de parcours (22) entraîné en rotation par un câble flexible (24). Le boîtier (16) adresse périodiquement au micro-ordinateur (54) les nombres N et M d'impulsions compter pendant une période donnée. Le micro-ordinateur (54) calcule et affiche sur son écran (58) les consommations instantanées et/ou moyenne, à l'heure et aux cent kilomètres, à partir de facteurs de calibration des impulsions de consommation et de parcours $F_c$ et $F_p$ calculés à la demande, sur instructions de l'opérateur.

Application à la vérification de tous moteurs à injection en garage et ateliers d'usine.

FIG.1

EP 0 581 633 A1

L'invention se rapporte à un dispositif de mesure de la consommation de carburant des moteurs des véhicules automobiles, et notamment des moteurs à injection.

La consommation de carburant des moteurs des véhicules automobiles est une information particulièrement utile dans les garages et les ateliers d'usine, pour la mise au point ou le diagnostic des causes de mauvais fonctionnement de ces moteurs.

Lorsqu'un véhicule automobile est équipé d'un micro-ordinateur de bord, il est courant de disposer d'un programme adapté à calculer et afficher les informations de consommation habituellement recherchées : nombre de litres aux cent kilomètres ou à l'heure, à un moment donné ou en moyenne, sur une distance ou un temps déterminé, nombre de litres total consommés sur un parcours donné et longueur totale de ce parcours. L'interface électronique et le logiciel d'application qui permettent d'obtenir ces résultats sont bien entendu figés, c'est-à-dire déterminés une fois pour toutes, en fonction du type particulier de véhicule concerné, et aucune interactivité n'est possible. Dans ces conditions, toute variation des paramètres de base du véhicule, et notamment le nombre de tours de roues au kilomètre qui se modifie en fonction de l'usure et du gonflage des pneumatiques, entraîne une erreur de calcul qui peut atteindre quatre pour cent. En outre, tout véhicule qui n'est pas du type particulier en question, ne peut faire l'objet de mesure de consommation de carburant, au moyen d'un tel équipement.

L'objet de l'invention concerne un dispositif de mesure interactif de la consommation de carburant de tous véhicules automobiles équipés de moteurs à injection.

Selon l'invention, un dispositif de mesure interactif de la consommation de carburant d'un véhicule automobile, équipé d'un moteur à injection électronique du genre comprenant :

- des moyens pour produire deux signaux numériques respectivement représentatifs de la distance parcourue à partir d'une origine et de la quantité de carburant consommée depuis cette origine;
- un micro-ordinateur adapté à traiter lesdits signaux;
- un logiciel d'application pour piloter ledit micro-ordinateur et lui faire combiner lesdits signaux afin d'élaborer puis afficher les consommations instantanées et/ou moyennes sur des unités de longueur et/ou de temps déterminés,
- caractérisé en ce que :
- les moyens pour produire lesdits deux signaux numériques sont contenus dans un boîtier électronique d'acquisition de données, adapté à être installé dans le compartiment du moteur, ledit boîtier comportant deux entrées respectivement connectées à la sortie du calculateur d'injection électronique du moteur et à la sortie d'un capteur de parcours, entraîné en rotation par un câble flexible raccordé à l'arbre de transmission du véhicule, ledit calculateur d'injection étant adapté à produire des impulsions de commande d'injection d'un volume unitaire déterminé de carburant et ledit capteur de parcours, à produire un nombre déterminé d'impulsions par tour de câble;

- ledit boîtier électronique d'acquisition de données étant adapté, par le moyen d'un microprocesseur programmé à cet effet, à compter les deux séries d'impulsions reçues pendant des intervalles de temps déterminés, à mettre en mémoire les résultats de ces deux comptages puis à les formater et à les transmettre audit micro-ordinateur de traitement de données, par un câble électrique amovible;

- ledit micro-ordinateur est du type "de poche" comportant un clavier pourvu de touches alphanumériques et d'instructions générales et un écran à cristaux liquides;

- ledit logiciel d'application est adapté, en réponse aux instructions codées, délivrées par le clavier manipulé par un opérateur, à commander l'affichage sur l'écran d'un menu d'opérations à effectuer, à faire exécuter l'opération sélectionnée, à en afficher le résultat et, le cas échéant, à le mémoriser;

- ledit menu d'opérations comprenant, outre celles visées plus haut, d'une part, la mesure du nombre d'impulsions fournies par le capteur de parcours lorsque le véhicule se déplace sur une distance au sol connue avec une bonne précision, le calcul, l'affichage et la mise en mémoire du facteur de calibration $F_p$ d'une de ces impulsions de parcours, et, d'autre part, l'introduction par l'opérateur, l'affichage et la mise en mémoire du volume unitaire $F_c$ de carburant injecté dans le moteur, en réponse à une impulsion de commande d'injection.

Grâce à ces dispositions, on réalise un dispositif de mesure interactif précis de la consommation de carburant, susceptible d'être installé sur tout véhicule automobile équipé d'un moteur à injection. En outre, en étant constitué de deux éléments indépendants, adaptés à être connectés l'un à l'autre par un câble de liaison électrique, il est possible d'installer à demeure un boîtier électronique d'acquisition de données standard sur les différents véhicules dont on veut contrôler la consommation de carburant, et de ne mettre en place et utiliser le micro-ordinateur de traitement des données qu'au moment où ce contrôle est effectué. Grâce à quoi, un seul micro-ordinateur de poche, - convenablement programmé, suffit à un garagiste par exemple pour exploiter au moment voulu, les signaux fournis par les boîtiers électroniques standards d'acquisition de données, installés sur plusieurs véhicules de même marque ou de marques différentes, équipés d'un moteur à injection électronique.

Les caractéristiques et avantages de l'invention ressortiront d'une manière plus précise, de la description qui va suivre, donnée à titre d'exemple non limitatif, en référence aux dessins annexés dans lesquels :

- la figure 1 représente le schéma général d'un dispositif de mesure de consommation selon l'invention;
- la figure 2, représente les étages fonctionnels du logiciel d'application régissant l'opération de calibration de parcours de ce dispositif;
- la figure 3 représente les étages fonctionnels du logiciel d'application régissant l'opération de calibration de consommation de ce dispositif;
- la figure 4 représente les étages fonctionnels du logiciel d'application régissant les différentes opérations de mesure susceptibles d'être effectuées par le dispositif de mesure selon l'invention.

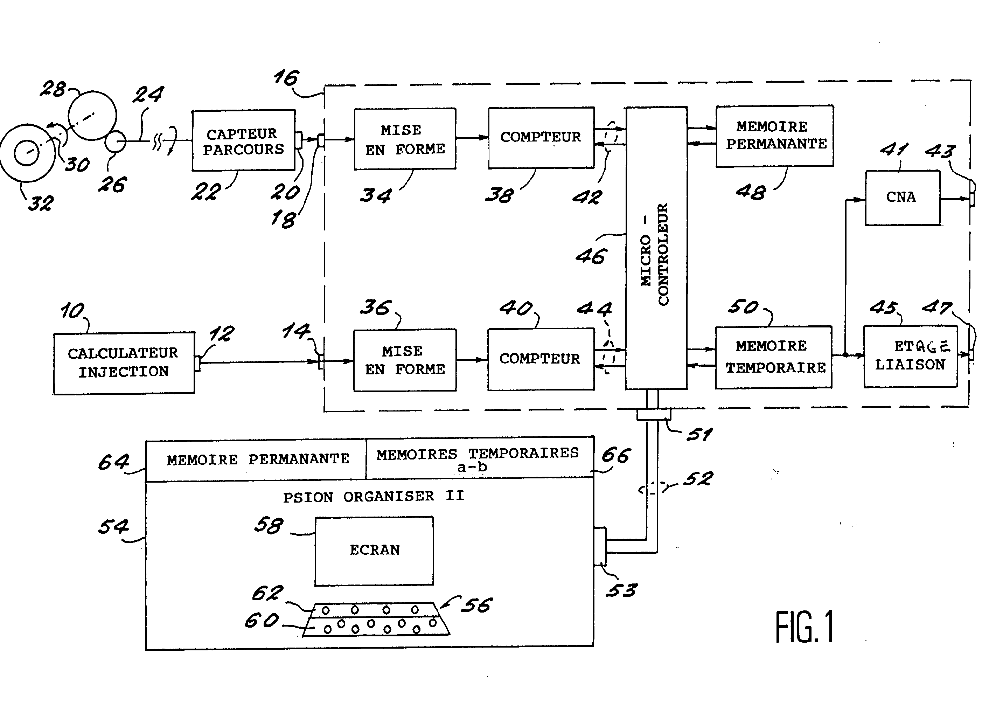

Selon la figure 1, le calculateur d'injection électronique 10 du moteur à injection d'un véhicule automobile (non représenté) comporte une sortie 12 connectée à l'une des deux entrées 14 d'un boîtier électronique d'acquisition de données 16, adapté à être installé dans le compartiment du moteur. Les signaux délivrés par le calculateur d'injection 10 sont des impulsions de commande d'injection. Chacune de ces impulsions provoque l'injection, au moment opportun, dans les cylindres du moteur, d'un volume unitaire déterminé d'essence. Ce volume unitaire est d'une manière générale compris entre 30 et 100 mm$^3$. Il est constant pour un type donné d'injecteurs montés sur les moteurs. Sa valeur est connue de tout professionnel concerné et elle constitue le facteur de calibration Fc des impulsions de consommation d'essence.

A l'autre entrée 18 du boîtier électronique 16, est connectée la sortie 20 d'un capteur de parcours 22, entraîné en rotation par un câble flexible 24. Ce câble 24 est lui-même entraîné par un engrenage 26-28 de rapport généralement compris entre 0,8 et 0,9 relié à l'arbre de transmission 30, qui fait tourner les roues motrices 32 du véhicule. Le capteur de parcours 22 est adapté à produire un nombre donné d'impulsions (8 par exemple) par tour complet du câble 24. Compte-tenu du rapport de réduction de l'engrenage 26-28, d'une part, du type, de l'usure et du gonflage, correct ou non, des pneumatiques, d'autre part, la distance parcourue, qui correspond à un tour complet du câble 24, peut varier dans une plage relativement importante. Pour un type de pneumatique donné, l'écart maximal peut atteindre 4%. D'une manière générale toutefois, pour des véhicules de tourisme, un tour de câble 24 correspond à peu près à 160 cm et une impulsion produite par le capteur 22, à 20 cm, soit 5000 impulsions en moyenne pour un parcours de 1000 mètres.

Le boîtier électronique 16 comprend à la suite de chacune de ses entrées 14-18, un étage de mise en forme 34-36, suivi d'un compteur d'impulsions 38-40. Chacun des deux compteurs d'impulsions 38-40 est relié par une connexion double (instruction-transfert) 42-44 à un microcontrôleur 46, par exemple du type 8016, pourvu d'une mémoire permanente 48 et d'une mémoire temporaire 50. La mémoire permanente 48 contient le logiciel d'exploitation usuel des microcontrôleurs du type concerné et un logiciel d'application spécifique, adapté à commander la remise à zéro périodique des compteurs 38-40 ainsi que le transfert, préalable de leurs contenus respectifs dans la mémoire temporaire 50. Pour chacun des doubles transferts ainsi effectués, le microcontrôleur 46 réalise préalablement le formatage adéquat des signaux reçus puis les transmet ainsi formatés sous un mode série (par exemple du type RS 232) par un câble électrique 52 muni de prises multibroches 51-53, à un micro-ordinateur de poche 54 installé dans l'habitacle du véhicule. Le boîtier électronique 16 comporte en outre, un convertisseur numérique-analogique 41 pourvu d'une borne de sortie analogique 43. L'entrée du convertisseur 41 et celle de l'étage de liaison 45 sont toutes deux susceptibles d'être ensemble reliées à la mémoire temporaire 50 en réponse à une instruction délivrée par le microcontrôleur 46. La borne de sortie analogique 43 est destinée à recevoir la prise de mesure d'un enregistreur graphique à entrée analogique. La borne de sortie numérique 47 est destinée à recevoir la prise de mesure d'un enregistreur graphique à entrée numérique. Ces enregistreurs sont de type standard et réalisent une représentation graphique en fonction du temps, des signaux analogiques ou numériques, qui leur sont respectivement appliqués en entrée.

Le micro-ordinateur de poche 54 est, par exemple, un PSION ORGANISER II, qui comporte un clavier de commande 56 et un écran d'affichage 58 du type à cristaux liquides, pourvu, de deux lignes de vingt caractères chacune. Le clavier de commande 56 comporte des touches alphanumériques 60 et des touches d'instructions particulières 62 telles que arrêt-marche général, début et fin d'une opération donnée, remise à zéro et déplacements en x et y d'un curseur lumineux, sur l'écran 58.

Le micro-ordinateur 54 comporte une mémoire permanente 64 et une mémoire temporaire 66. La mémoire permanente 64 contient le logiciel d'exploitation usuel des micro-ordinateurs du type en question et un logiciel d'application spécifique des opérations à réaliser. La mémoire temporaire 66 est double et comprend une section 66a sauvegardée par batterie et une section 66b non sauvegardée, qui est effacée, notamment, à chaque arrêt général du micro-ordinateur 54.

Lorsque les différents éléments du dispositif selon l'invention, pour mesurer la consommation du moteur à injection d'un véhicule automobile, sont installés sur un véhicule donné et convenablement alimentés, la mise en marche générale du micro-ordinateur 54 fait apparaître sur l'écran 58, le menu général des opérations susceptibles d'être réalisées. Ce menu est bien entendu affiché sous le contrôle du logiciel d'application du micro-ordinateur 54. Ce menu général comporte deux opérations possibles : "Calibrages et Mesures". Avec le curseur lumineux, l'opérateur sélectionne l'opération qu'il veut réaliser. S'il choisit "Calibrages", le menu des opérations de ce type apparaît : "Impulsions-Parcours" et "Impulsions-Consommation".

En choisissant "Calibrage Impulsions-Parcours", à l'aide du curseur lumineux, l'opérateur démarre l'opération de calibrage des distances parcourues. Pour ce faire, le véhicule, préalablement conduit à l'entrée d'un parcours de référence, constitué par une route relativement droite comprenant au moins deux bornes kilométriques, est mis en mouvement à une vitesse relativement faible. En passant devant la première borne, l'opérateur déclenche le début de l'opération de calibrage des Impulsions de Parcours, en appuyant sur la touche "Début", prévue à cet effet. De même, en passant devant la deuxième ou la troisième borne, il appuiera sur la touche "Fin" d'opération. A défaut de route droite, l'opérateur utilisera les rouleaux du banc d'essai du garage pourvu, bien entendu, que ces rouleaux aient une circonférence connue avec précision et, en outre, soient associés à un compteur de nombre de tours afin de pouvoir constituer l'équivalent d'un parcours de référence.

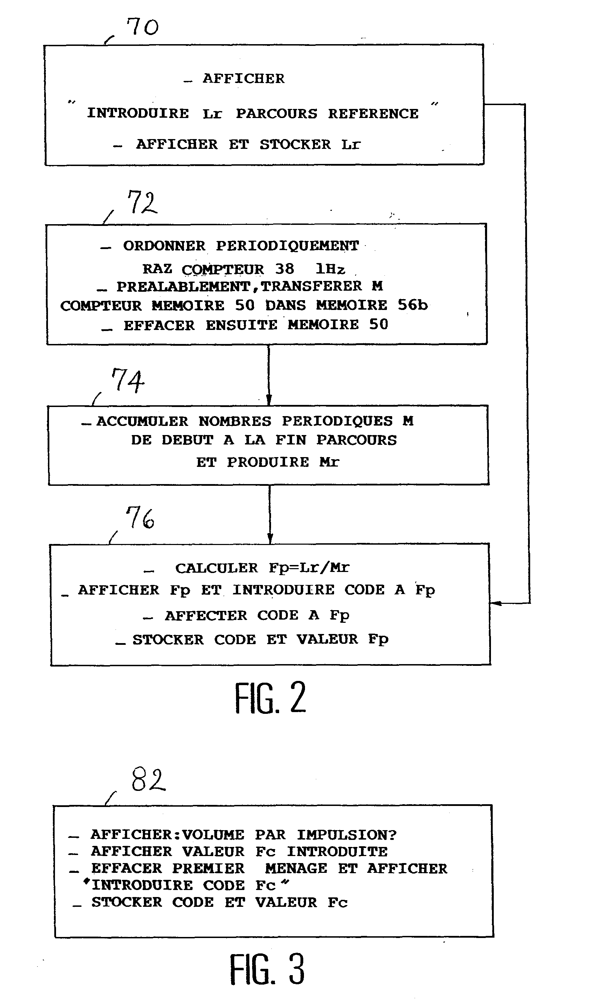

Selon la figure 2, la partie du logiciel d'application régissant l'opération de calibrage des Impulsions de Parcours comprend les étages fonctionnels suivants :

(1) un étage 70 pour commander au micro-ordinateur 54 :

a) d'afficher le message suivant sur l'écran 58 "Introduire Lr, Longueur Parcours Référence" et

b) d'afficher sur l'écran 58 et de stocker en mémoire temporaire 66b, la longueur de référence Lr, introduite par l'opérateur au moyen du clavier 56;

(2) un étage 72 pour commander au microcontrôleur 46

a) d'adresser chaque seconde au compteur 38, une instruction de remise à zéro,

b) de transférer au préalable de sa mémoire temporaire 50 à la mémoire temporaire 66b du micro-ordinateur 54, le nombre M d'impulsions comptées entre deux remises à zéro consécutives et

c) d'effacer ensuite le contenu de la section concernée de sa mémoire temporaire 50;

(3) un étage 74 pour commander au micro-ordinateur 54 d'accumuler les nombres d'impulsions M qui lui sont ainsi périodiquement transmis, depuis le début jusqu'à la fin du parcours de référence, et ainsi produire un nombre d'impulsions de référence $M_r$;

(4) un étage 76 pour commander au micro-ordinateur 54

a) de diviser la longueur en mètres du parcours de référence Lr par le nombre d'impulsions de référence Mr et ainsi produire le facteur de calibration d'une impulsion de parcours $F_p = L_r/M_r$;

b) d'afficher cette valeur $F_p$ sur l'écran 58 avec le message "Introduire Code $F_p$",

c) d'affecter à la valeur $F_p$, le code introduit par l'opérateur à la suite de ce message et

d) de stocker code et valeur $F_p$ dans la section sauvegardée 66a de la mémoire temporaire;

(5) un étage complémentaire 78 pour ensuite commander au micro-ordinateur 54 d'afficher le Menu Général sur l'écran 58.

Le calibrage des Impulsions de Parcours ayant été effectué, soit par le passé soit à l'instant, l'opérateur voit apparaître sur l'écran le Menu Général "Calibrage-Mesures". S'il choisit le menu "Calibrages", puis dans ce Menu l'opération "Calibrages Impulsions Consommation", la partie du logiciel d'application régissant cette opération se met en oeuvre, qui comprend les étages fonctionnels suivants, représentés à la figure 3 :

(1) un étage 82 pour commander au micro-ordinateur 54

a) d'afficher sur l'écran 58, le message suivant "Introduire Volume par Impulsion en mm³"

b) d'afficher la valeur $F_c$ du facteur de calibration d'une impulsion de consommation, introduite par l'opérateur à la suite de ce message, au moyen du clavier 56,

c) d'effacer le message précédent et lui substituer le suivant "Introduire Code Fc"

d) d'affecter à la valeur Fc ainsi affichée, le code d'identité introduit par l'opérateur, au moyen du clavier 56, dès l'apparition de ce message et e) de stocker la valeur de $F_c$ et son code, dans la section sauvegardée 66a de la mémoire temporaire;

(2) un étage complémentaire pour commander ensuite au micro-ordinateur 54, d'afficher le menu général sur l'écran 58.

Les opérations de calibrage des impulsions de parcours et de consommation ayant été effectuées par le passé ou à l'instant, l'opérateur voit sur l'écran 58, le Menu Général "Calibrages-Mesures". S'il est satisfait des opérations de calibrage précédemment effectuées et de facteurs $F_p$ et $F_c$ stockés, il sélectionne alors l'opération "Mesures" à l'aide du curseur lumineux. Cela fait, il voit alors apparaître en code le menu général des mesures proposées :

- Consommation Instantanée en Litres par Heure (CILH)
- Consommation Instantanée en Litres aux cent Kilomètres (CILK)
- Consommation Moyenne en Litres aux cent kilomètres (CMLK)
- Consommation Totale du Parcours (CTP)
- Distance Totale Parcourue (DTP)

Cet affichage est effectué sous le contrôle d'une partie du logiciel d'application qui ne sera pas précisée davantage.

Si l'opérateur désire sélectionner les fonctions CILH ou CILK, il devra au préalable brancher la prise de mesure d'un enregistreur graphique sur l'une des bornes de sortie 43 (analogique) ou 47 (numérique) du boîtier électronique 16.

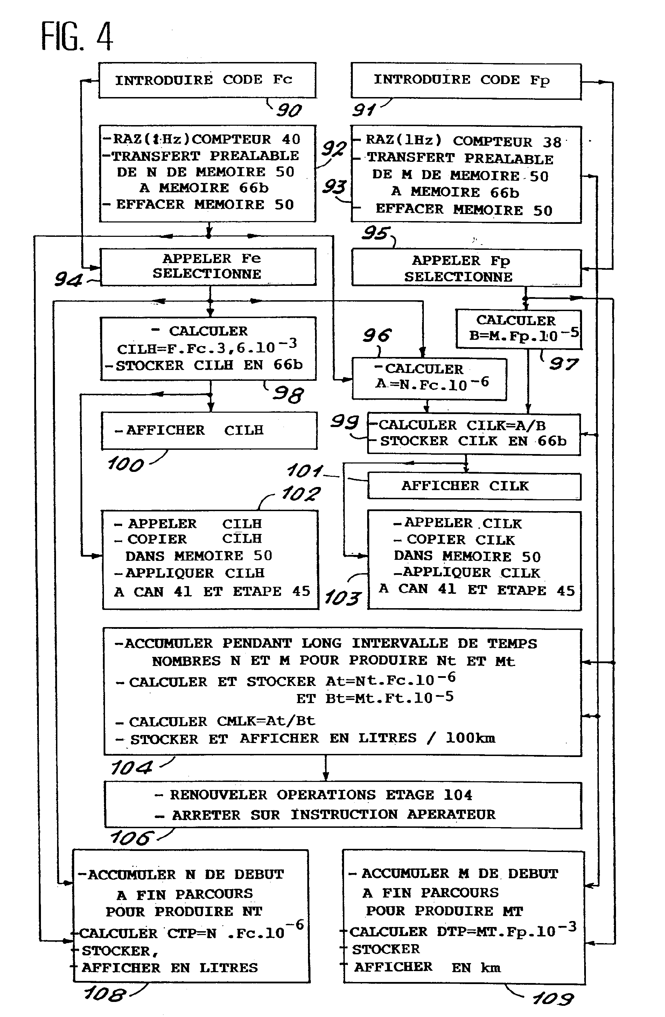

Cela fait, s'il choisit la fonction CILH, le logiciel d'application met en oeuvre certains des étages fonctionnels représentés à la figure 4, à savoir :

(1) un étage 90 pour commander au micro-ordinateur 54

a) d'afficher le message suivant sur l'écran 58 "Introduire Code Fc"

b) d'afficher la valeur de $F_c$ stockée en 66a, précédemment introduite par l'opérateur au cours d'une opération de calibrage.

(2) un étage 92 pour commander au microcontrôleur 46,

a) d'adresser chaque seconde au compteur 40, une instruction (une impulsion de 0,1 milliseconde par exemple) de remise à zéro,

b) de transférer au préalable de sa mémoire temporaire 50 à la mémoire temporaire 66b du micro-ordinateur 54, le nombre N d'impulsions comptées entre deux remises à zéro consécutives, et

c) d'effacer les signaux contenus dans la section concernée de sa mémoire 50;

(3) un étage 94 pour commander au micro-ordinateur 54 d'appeler le facteur de calibration des impulsions de consommation $F_c$ précédemment sélectionné par l'introduction du code de l'injecteur;

(4) un étage 98 pour commander au micro-ordinateur 54 d'effectuer la triple multiplication suivante : CILH = N x $F_c$ x 3,6 x $10^{-3}$ et d'en stocker un moment le résultat dans la mémoire temporaire 66b;

(5) un étage 100 pour commander au micro-ordinateur 54 d'afficher sur l'écran 58, en litres par heure, le résultat CILH de l'opération précédente;

(6) un étage 102 pour commander au micro-ordinateur 54 d'ordonner au microcontrôleur 46 d'appeler le résultat CILH ainsi stocké dans la mémoire temporaire 66b, afin de le recopier dans sa mémoire temporaire 50 et de l'appliquer à l'entrée du convertisseur numérique- analogique 41 et à celle de l'étage de liaison 45.

Après avoir enregistré un certain temps l'évolution de la consommation instantanée à l'heure de son moteur (en fonction par exemple de la vitesse du véhicule et/ou des pentes du parcours), l'opérateur peut décider d'en faire de même pour la consommation instantanée aux cent kilomètres parcourus. Pour ce faire, il appuie sur la touche Fin du clavier 56 et le menu général s'affiche à nouveau. Il sélectionne "Mesures" puis la fonction CILK.

Dans ce cas, le logiciel d'application met en oeuvre certains des étages fonctionnels suivants, représentés à la figure 4, à savoir :

(1), (2), (3) les étages 90-92-94 décrits ci-dessus, (4) un étage 91 pour

a) afficher le message suivant :"Introduire Code $F_p$" et

b) afficher sur l'écran 58 la valeur $F_p$ stockée en 66a, précédemment calculée au cours d'une opération de calibrage des impulsions de parcours;

(5) un étage 93 identique à l'étage 72 ci-dessus pour commander au microcontrôleur 46,

a) d'adresser chaque seconde au compteur 38, une instruction de remise à zéro,

b) de transférer au préalable de sa mémoire temporaire 50 à la mémoire temporaire 66b du micro-ordinateur 54, le nombre M d'impulsions comptées par le compteur 38 entre deux remises à zéro consécutives;

(6) un étage 95 pour commander au micro-ordinateur 54 d'appeler le facteur de calibration $F_p$ des impulsions de parcours précédemment sélectionné;

(7) un étage 96 pour commander au micro-ordinateur 54 de calculer et de stocker un moment dans la mémoire temporaire 66b le résultat de la multiplication A = N.$F_c$.$10^{-6}$;

(8) un étage 97 pour commander au micro-ordinateur 54 de calculer et de stocker un moment dans la mémoire temporaire 66b, le résultat de la multiplication B = M.$F_p$.$10^{-5}$;

(9) un étage 99 pour commander au micro-ordinateur 54 de calculer et de stocker un moment dans la mémoire temporaire 66b, le résultat CILK = A/B;

(10) un étage 101 pour commander au micro-ordinateur 54 d'afficher sur l'écran 58, en litres aux cent kilomètres, le résultat CILK de l'opération précédente;

(11) un étage 103 pour commander au micro-ordinateur 54 d'ordonner au microcontrôleur 46

a) d'appeler ce résultat CILK ainsi stocké dans la mémoire temporaire 66b,

b) de le copier dans sa mémoire temporaire 50 et

c) de l'appliquer à l'entrée du convertisseur numérique-analogique 41 et à celle de l'étage de liaison 45.

Les consommations instantanées à l'heure et/ou aux cent kilomètres ayant été mesurées et, le cas échéant, enregistrées, l'opérateur peut être intéressé par l'une et/ou l'autre des trois informations qui lui sont offertes : CMLK, CTP et DTP. En pratique ces trois informations sont en permanence calculées et stockées dans la mémoire temporaire 66b du micro-ordinateur 54 et l'opérateur en choisissant l'une d'elles au moyen du curseur lumineux la fait immédiatement apparaître.

Le calcul de CMLK est réalisé sous le contrôle d'un logiciel d'application comprenant certains des étages fonctionnels suivants, représentés à la figure 4, à savoir :

(1) à (6), les six étages 90 à 95 ci-dessus;

(7) un étage 104 pour commander au micro-ordinateur 54, après en avoir reçu instruction de l'opérateur, d'effectuer les opérations suivantes :

a) accumuler pendant un nombre donné de minutes, cinq par exemple, dans deux compteurs -incorporés, les nombres d'impulsions N et M au fur et à mesure de leurs transferts et à la fin de l'intervalle de comptage, stocker un moment dans la mémoire temporaire 66b, les nombres totaux $N_t$ et $M_t$;

b) calculer et stocker un moment dans la mémoire temporaire 66b, les résultats des multiplications $A_t = N_t.F_c.10^{-6}$ et $B_t = M_t.F_p.10^{-5}$;

c) effectuer la division $A_t/B_t$ et en stocker le résultat CMLK dans la mémoire temporaire 66b;

d) afficher sur l'écran 58, en litres aux cent kilomètres, le résultat CMLK de l'opération précédente;

(8) un étage 106 pour commander au micro-ordinateur 54

a) de renouveler immédiatement les opérations effectuées par l'étage 104 et

b) de les arrêter au moment où l'opérateur donne instruction d'y mettre fin.

(9) un étage complémentaire 108 pour commander ensuite au micro-ordinateur 54 d'afficher le Menu Général sur l'écran 58.

Le calcul de la consommation totale du parcours CTP est réalisé sous le contrôle d'un logiciel d'application comprenant certains des étages fonctionnels, représentés à la figure 4, à savoir :

(1), (2), (3) : les trois étages 90, 92 et 94 ci-dessus

(4) un étage 110 pour commander au micro-ordinateur 54 d'effectuer les opérations suivantes :

a) accumuler dans un compteur incorporé les nombres N transmis à partir d'un instant-origine et jusqu'à un instant-fin de parcours, déterminés par l'opérateur au moyen du clavier 56, et ainsi produire constamment un nombre total $N_T$,

b) effectuer chaque seconde la multiplication

$CTP = N_T \times F_c \times 10^{-6}$,

c) stocker le résultat jusqu'à sa mise à jour à la fin de la seconde suivante

d) afficher le résultat CTP sur l'écran 58, en litres.

Le calcul de la distance totale parcourue DTP est réalisé sous le contrôle d'un logiciel d'application comprenant certains des étages fonctionnels représentés à la figure 4, à savoir :

(1), (2), (3) : les trois étages 91, 93, 95 ci-dessus,

(4) un étage 109 pour commander au micro-ordinateur 54 d'effectuer les opérations suivantes :

a) accumuler dans un compteur incorporé les nombres M transmis à partir d'un instant-origine et jusqu'à un instant-fin de parcours, déterminés par l'opérateur au moyen du clavier 56, et ainsi produire constamment un nombre total $M_T$,

b) effectuer la multiplication DTP = $M_T.F_p.10^{-3}$,

c) stocker le résultat jusqu'à sa mise à jour à la fin de la seconde suivante et

d) afficher le résultat DTP en kilomètres sur l'écran 58.

A titre de variante, le logiciel d'application représenté à la figure 4 pourra comprendre en amont des étages 90-91 et 94-95, un étage, adapté à commander au micro-ordinateur 54 :

a) d'afficher sur l'écran 58, le double message suivant : "Maintien des derniers $F_c$ et/ou $F_p$ utilisés ?"

b) de mettre en oeuvre les étages disposés en aval des étages 90-91 et 94-95 si la réponse est OUI aux deux questions et

c) de mettre en oeuvre les étages 90-91 et/ou 94-95 puis les étages disposés en aval de ceux-ci, si la réponse est NON à l'une et/ou l'autre de ces questions.

**Revendications**

1. Dispositif de mesure interactif de la consommation de carburant d'un véhicule automobile équipé d'un moteur à injection électronique, du genre comprenant :

- des moyens pour produire deux signaux numériques respectivement représentatifs de la distance parcourue à partir d'une origine et de la quantité de carburant consommée depuis cette origine;

- un micro-ordinateur adapté à traiter lesdits signaux;

- un logiciel d'application pour piloter ledit micro-ordinateur et lui faire combiner lesdits signaux afin d'élaborer puis afficher les consommations instantanées et/ou moyennes sur des unités de longueur et/ou de temps déterminées,
- caractérisé en ce que :
- les moyens pour produire lesdits deux signaux numériques sont contenus dans un boîtier électronique (16) d'acquisition de données, adapté à être installé dans le compartiment du moteur, ledit boîtier comportant deux bornes d'entrée (14-18) respectivement connectées à la sortie (12) du calculateur électronique d'injection (10) du moteur et à la sortie (20) d'un capteur de parcours (22), entraîné en rotation par un câble flexible (24) raccordé (26-28) à l'arbre de transmission (30) du véhicule, ledit calculateur (10) étant adapté à produire des impulsions de commande d'injection d'un volume unitaire déterminé de carburant et ledit capteur (22), à produire un nombre déterminé d'impulsions de parcours par tour de câble (24);
- ledit boîtier électronique (16) d'acquisition de données comprenant deux étages (34-36), de mise en forme impulsions ainsi fournies et étant adapté, par le moyen d'un microprocesseur (46) programmé à cet effet et de deux compteurs (38-40) placés sous son contrôle, à compter les impulsions ainsi mises en forme reçues pendant des intervalles de temps déterminés, à stocker dans une mémoire temporaire (50) les résultats de ces deux comptages puis à les formater et à les transmettre audit micro-ordinateur (54) de traitement de données, par le moyen d'un câble électrique amovible (52), équipé de prises (51-53);
- ledit micro-ordinateur (54) est du type micro-ordinateur de poche, comportant un clavier (56), pourvu de touches alphanumériques (60) et d'instructions générales (62), et un écran d'affichage (58) à cristaux liquides;
- ledit logiciel d'application est adapté, en réponse aux instructions délivrées par le clavier (56) manipulé par l'opérateur, à commander l'affichage sur l'écran (58) d'un menu d'opération à effectuer, à faire exécuter l'opération sélectionnée par l'opérateur, à en afficher le résultat et, le cas échéant, à le mettre en mémoire;
- ledit menu d'opérations comprenant outre celles visées plus haut, d'une part, la mesure du nombre d'impulsions fournies par le capteur de parcours (22) lorsque le véhicule se déplace sur une distance au sol connue avec une bonne précision, le calcul, l'affichage et la mise en mémoire du facteur de calibration $F_p$ d'une de ces impulsions de parcours et, d'autre part, l'introduction par l'opérateur, l'affichage et la mise en mémoire du facteur de calibration Fc d'une impulsion de consommation, c'est-à-dire le volume unitaire de carburant injecté dans le moteur en réponse à une impulsion de commande d'injection.

2. Dispositif de mesure de consommation selon la revendication 1, caractérisé en ce que le logiciel d'application régissant l'opération de calibrage des impulsions de parcours comprend les étages fonctionnels suivants pilotant le micro-ordinateur (54);

   (1) un étage (70) pour faire effectuer les opérations suivantes :
      a) afficher sur l'écran (58) le message "Introduire Longueur Parcours Référence" et
      b) afficher sur l'écran (58) et stocker dans une mémoire temporaire (66b) associée au micro-ordinateur (54), la longueur de référence $L_r$ introduite par l'opérateur à l'aide du clavier (56);
   (2) un étage (72) pour faire effectuer les opérations suivantes :
      a) adresser périodiquement, notamment chaque seconde, au compteur (38) du boîtier électronique (16) recevant les impulsions délivrées par le capteur de parcours (22), une instruction de remise à zéro,
      b) transférer au préalable de sa mémoire temporaire (50) à la mémoire temporaire (66b) du micro-ordinateur (54), le nombre M d'impulsions comptées entre deux remises à zéro consécutives et
      c) à effacer ensuite le contenu de la section concernée de la mémoire temporaire (50);
   (3) un étage (74) pour accumuler les nombres d'impulsions M périodiquement transmis depuis le début jusqu'à la fin du parcours de référence établi par l'opérateur, afin de produire un nombre de référence $M_r$ d'impulsions de parcours;
   (4) un étage (76) pour faire effectuer les opérations suivantes :
      a) calculer le facteur de calibration d'une impulsion de parcours $F_p = L_r/M_r$,
      b) afficher cette valeur $F_p$ sur l'écran (58) avec le message "Introduire Code $F_p$",
      c) affecter à la valeur $F_p$ précédemment calculée, le code introduit par l'opérateur à la suite de ce message et
      d) stocker code et valeur $F_p$ dans une section sauvegardée (66a) de la mémoire temporaire du micro-ordinateur (54).

3. Dispositif de mesure de consommation selon la revendication 1, caractérisé en ce que le logiciel d'application, régissant l'opération de calibrage des impulsions de consommation, comprend un étage fonctionnel (82) pour commander au micro-ordinateur (54) d'effectuer les opérations suivantes :

a) afficher sur l'écran (58) le message "Volume par impulsion en mm³ ?"

b) afficher la valeur $F_c$ du facteur de calibration d'une impulsion de consommation, en réponse aux données introduites par l'opérateur à la suite de ce message, au moyen du clavier (56),

c) effacer le message précédent et lui substituer "Introduire Code $F_c$"

d) affecter à la valeur $F_c$ affichée, le code d'identité du calculateur d'injection concerné, introduit par l'opérateur et

e) stocker code et valeur $F_c$ dans la section sauvegardée (66a) de la mémoire temporaire du micro-ordinateur (54).

4. Dispositif de mesure de consommation selon la revendication 1, caractérisé en ce que le logiciel d'application régissant l'opération de calcul et d'affichage de la consommation instantanée en litres par heure (CILH) comprend les étages fonctionnels suivants pilotant le micro-ordinateur (54);

- un étage (90) pour faire effectuer les opérations suivantes :

a) afficher sur l'écran (58) le message "Introduire Code $F_c$" et

b) afficher sur l'écran la valeur de $F_c$, identifiée par le code introduit par l'opérateur stockée dans la mémoire (66a) par la mise en oeuvre du logiciel décrit à la revendication 3;

- un étage (92) pour faire effectuer les opérations suivantes :

a) adresser périodiquement, et notamment chaque seconde, au compteur (40) recevant les impulsions de consommation délivrées par le calculateur d'injection (10), une instruction de remise à zéro,

b) transférer au préalable de sa mémoire temporaire (50) à la mémoire temporaire (66b) du micro-ordinateur (54) le nombre N d'impulsions comptées entre deux remises à zéro consécutives et

c) effacer le contenu de la section concernée de la mémoire (50);

- un étage (94) pour faire appeler le facteur de calibration $F_c$ précédemment sélectionné;

- un étage (98) pour faire calculer CILH = $N.F_c.3,6.10^{-3}$ et, en stocker un moment le résultat dans la mémoire temporaire (66b);

- un étage (100) pour faire afficher sur l'écran (58), en litres par heure, la valeur de CILH ainsi calculée et stockée.

5. Dispositif de mesure de consommation selon la revendication 1, caractérisé en ce que le logiciel d'application régissant l'opération de calcul et d'affichage de la consommation instantanée de carburant en litres aux cent kilomètres (CILK), comprend les étages fonctionnels suivants, pilotant le micro-ordinateur (54);

- les trois premiers étages (90-92-94) du logiciel décrit à la revendication 4,

- un étage (91) pour faire effectuer les opérations suivantes :

a) afficher sur l'écran (58) le message "Introduire Code $F_p$" et

b) afficher sur l'écran la valeur de $F_p$, identifiée par le code introduit par l'opérateur, stockée dans la mémoire (66a) par la mise en oeuvre du logiciel décrit à la revendication 2;

- un étage (93) identique à l'étage (72) présenté à la revendication 2;

- un étage (95) pour faire appeler le facteur de calibration $F_p$ précédemment sélectionné;

- un étage (96) pour faire calculer et stocker un moment dans la mémoire temporaire (66b) les résultats des multiplications $A = N.F_c.10^{-6}$ et $B = M.F_p.10^{-5}$;

- un étage (99) pour faire calculer CILK = A/B et en stocker un moment le résultat dans la mémoire temporaire (66b);

- un étage (101) pour faire afficher sur l'écran (58), en litres aux cent kilomètres, la valeur CILK ainsi calculée.

6. Dispositif de mesure de consommation selon la revendication 5, caractérisé en ce que :

- le boîtier électronique (16) comporte un convertisseur numérique-analogique (41) et un étage de liaison (45);

- le logiciel d'application régissant l'opération de calcul de CILK comprend un étage complémentaire (103) pour faire ordonner au microprocesseur (46)

a) d'appeler la valeur CILK ainsi stockée dans la mémoire temporaire (66b),

b) de copier cette valeur dans sa mémoire temporaire (50) et

c) de l'appliquer à l'entrée dudit convertisseur (41) et dudit étage (45), la sortie de ce convertisseur et celle de cet étage étant destinées à être reliées aux entrées respectivement analogique et numérique, d'enregistreurs graphiques.

7. Dispositif de mesure de consommation selon la revendication 1, caractérisé en ce que le logiciel d'application régissant l'opération de calcul et d'affichage de la consommation moyenne de carburant, en litres aux cent kilomètres, (CMLK) comprend les étages fonctionnels suivants pilotant le micro-ordinateur (54):

- les trois premiers étages (90-92-94) et (91-93-95) des deux logiciels décrits aux revendications 4 et 5;
- un étage (104) pour faire effectuer les opérations suivantes, après en avoir reçu instruction par l'opérateur :

    a) accumuler pendant un intervalle de temps relativement long, déterminé, les nombres N et M d'impulsions de consommation et de parcours, au fur et à mesure de leurs transferts périodiques, de manière à produire à la fin dudit intervalle de comptage des nombres totaux Nt et Mt et stocker un moment ces nombres totaux dans la mémoire temporaire (66b),

    b) calculer et stocker un moment dans cette même mémoire, les résultats des multiplications
    $At = N_t.F_c.10^{-6}$ et $B_t = M_t.F_p.10^{-5}$

    c) calculer $CMLK = A_t/B_t$ et la stocker dans la mémoire temporaire (66b) et d) afficher sur l'écran (58), en litres aux cent kilomètres, la valeur de CMLK;

- un étage (106) pour

    a) faire immédiatement renouveler les opérations effectuées par l'étage précédent (104) et

    b) faire arrêter ce renouvellement, à partir du moment où l'opération en donne instruction.

8. Dispositif de mesure de consommation selon la revendication 1, caractérisé en ce que le logiciel d'application régissant l'opération de calcul et d'affichage de la consommation totale en litres (CTP) au cours d'un parcours, comprend les étages fonctionnels suivants pilotant le micro-ordinateur (56)

- les trois premiers étages (90-92-94) du logiciel décrit à la revendication 4;
- un étage (108) pour faire effectuer les opérations suivantes :

    a) accumuler les nombres N d'impulsions de consommation, périodiquement transmis à partir d'un instant-origine et jusqu'à un instant-fin de parcours déterminés par l'opérateur au moyen du clavier (56) et ainsi constamment produire un nombre total $N_T$,

    b) effectuer à la fin de chaque période de transmission le calcul $CTP = N_T.F_c.10^{-6}$,

    c) stocker le résultat jusqu'à sa mise à jour à la fin de la période suivante et d) afficher en litres, le résultat CTP sur l'écran (58).

9. Dispositif de mesure de la distance totale parcourue (DTP) caractérisé en ce qu'il comprend :
    - un dispositif selon la revendication 1,
    - un logiciel d'application comprenant les étages fonctionnels suivants, pilotant le micro-ordinateur (54),
    - les trois premiers étages (91-93-95) du logiciel décrit à la revendication 5,
    - un étage (109) pour faire effectuer les opérations suivantes :

        a) accumuler les nombres M d'impulsions de parcours, périodiquement transmis, à partir d'un instant-origine et jusqu'à un instant-fin de parcours, établis par l'opérateur et ainsi produire constamment un nombre total $M_T$,

        b) calculer $DTP = M_T.F_p.10^{-3}$, c) stocker ce résultat jusqu'à sa mise à jour à la fin de la période suivante et d) afficher DTP en kilomètres sur l'écran (58).

10. Dispositif de mesure de consommation selon les revendications 4 et 5, caractérisé en ce que les logiciels concernés comportent tous deux un premier étage fonctionnel disposé en amont des étages (90-92) et (91-93), adapté à commander au microprocesseur (54) d'effectuer les opérations suivantes :

    a) afficher sur l'écran (58) le double message "Maintien des derniers $F_c$ et/ou $F_p$ utilisés ?",

    b) mettre en oeuvre les étapes disposés en aval desdits étages (90-92) et (91-93), si la réponse est OUI aux deux questions posées et

    c) mettre en oeuvre les étages (90-92) et/ou (91-93) puis les étages disposés en aval de ceux-ci, au cas où la réponse serait NON à l'une et/ou l'autre de ces questions.

FIG.1

CAPTEUR PARCOURS

MISE EN FORME

COMPTEUR

MEMOIRE PERMANANTE

CNA

MICRO - CONTROLEUR

CALCULATEUR INJECTION

MISE EN FORME

COMPTEUR

MEMOIRE TEMPORAIRE

ETAGE LIAISON

MEMOIRE PERMANANTE

MEMOIRES TEMPORAIRES a-b

PSION ORGANISER II

ECRAN

EP 0 581 633 A1

EP 0 581 633 A1

70

- AFFICHER

" INTRODUIRE Lr PARCOURS REFERENCE "

- AFFICHER ET STOCKER Lr

72

- ORDONNER PERIODIQUEMENT
  RAZ COMPTEUR 38   1Hz
- PREALABLEMENT,TRANSFERER M
COMPTEUR MEMOIRE 50 DANS MEMOIRE 56b
- EFFACER ENSUITE MEMOIRE 50

74

- ACCUMULER NOMBRES PERIODIQUES M
  DE DEBUT A LA FIN PARCOURS
  ET PRODUIRE Mr

76

- CALCULER Fp=Lr/Mr
- AFFICHER Fp ET INTRODUIRE CODE A Fp
- AFFECTER CODE A Fp
- STOCKER CODE ET VALEUR Fp

FIG. 2

82

- AFFICHER:VOLUME PAR IMPULSION?
- AFFICHER VALEUR Fc INTRODUITE
- EFFACER PREMIER  MENAGE ET AFFICHER
  "INTRODUIRE CODE Fc "
- STOCKER CODE ET VALEUR Fc

FIG. 3

11

EP 0 581 633 A1

# FIG. 4

| INTRODUIRE CODE Fc | INTRODUIRE CODE Fp |
|---|---|

*90* *91*

| -RAZ(1Hz)COMPTEUR 40 | -RAZ(1Hz) COMPTEUR 38 |
|---|---|
| -TRANSFERT PREALABLE | -TRANSFERT PREALABLE |
| DE N DE MEMOIRE 50 | DE M DE MEMOIRE 50 |
| A MEMOIRE 66b | A MEMOIRE 66b |
| - EFFACER MEMOIRE 50 | - EFFACER MEMOIRE 50 |

*92* *93*

| APPELER Fe | APPELER Fp |
|---|---|
| SELECTIONNE | SELECTIONNE |

*94* *95*

| - CALCULER | | CALCULER |
|---|---|---|
| $CILH=F.Fc.3,6.10^{-3}$ | | $B=M.Fp.10^{-5}$ |
| -STOCKER CILH EN 66b | | |

*96* *97*

| -CALCULER |
|---|
| $A=N.Fc.10^{-6}$ |

*98*

| -AFFICHER CILH | | -CALCULER CILK=A/B |
|---|---|---|
| | | -STOCKER CILK EN 66b |

*100* *99*

| AFFICHER CILK |
|---|

*101*

*102*

| - APPELER CILH | - APPELER CILK |
|---|---|
| - COPIER CILH | - COPIER CILK |
| DANS MEMOIRE 50 | DANS MEMOIRE 50 |
| -APPLIQUER CILH | -APPLIQUER CILK |
| A CAN 41 ET ETAPE 45 | A CAN 41 ET ETAPE 45 |

*103*

| -ACCUMULER PENDANT LONG INTERVALLE DE TEMPS |
|---|
| NOMBRES N ET M POUR PRODUIRE Nt ET Mt |
| - CALCULER ET STOCKER $At=Nt.Fc.10^{-6}$ |
| ET $Bt=Mt.Ft.10^{-5}$ |
| - CALCULER CMLK=At/Bt |
| - STOCKER ET AFFICHER EN LITRES / 100km |

*104*

| - RENOUVELER OPERATIONS ETAGE 104 |
|---|
| - ARRETER SUR INSTRUCTION APERATEUR |

*106*

| -ACCUMULER N DE DEBUT | - ACCUMULER M DE DEBUT |
|---|---|
| A FIN PARCOURS | A FIN PARCOURS |
| POUR PRODUIRE NT | POUR PRODUIRE MT |
| -CALCULER $CTP=N.Fc.10^{-6}$ | -CALCULER $DTP=MT.Fp.10^{-3}$ |
| -STOCKER, | - STOCKER |
| -AFFICHER EN LITRES | - AFFICHER EN km |

*108* *109*

12

Office européen
des brevets

**RAPPORT DE RECHERCHE EUROPEENNE**

Numero de la demande

EP    93 40 1781

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 120 976 (NISSAN MOTOR CO. LTD) <br> * abrégé; figure 1 * <br> --- | 1 | G01F9/02 <br> G01F9/00 <br> G01F25/00 |
| A | US-A-4 581 708 (W. F. VAN OSTRAND ET AL) <br> * abrégé; figures 1,2 * <br> --- | 1 | |
| A | US-A-4 798 084 (T. TAKAHASHI ET AL) <br> * abrégé; figure 1 * <br> --- | 1 | |
| A | EP-A-0 097 337 (HITACHI LTD) <br> * abrégé; figure 1 * <br><br> ----- | 1,9 | |

DOMAINES TECHNIQUES RECHERCHES (Int. Cl.5)

G01F
F02M
G07C
G01C

Le présent rapport a été établi pour toutes les revendications

| Lieu de la recherche | Date d'achèvement de la recherche | Examinateur |
|---|---|---|
| BERLIN | 28 OCTOBRE 1993 | VORROPOULOS G. |